# EUROPEAN PATENT APPLICATION

(11) **EP 4 369 265 A1**
(43) Date of publication of application: **15.05.2024**
(21) Application number: 23195088.2
(22) Date of filing: 04.09.2023
(51) Int. Cl.: G06Q 10/087

(54) **INFORMATION PROCESSING METHOD**

(30) Priority: 09.11.2022 JP 2022179431
(71) Applicant: KABUSHIKI KAISHA TOSHIBA, Minato-ku Tokyo 105-0023 (JP)
(72) Inventor: YAMASHITA, Lan, Minato-ku Tokyo 105-0023 (JP); IWAMASA, Mikito, Minato-ku Tokyo 105-0023 (JP); FUJIWARA, Koji, Minato-ku Tokyo 105-0023 (JP)
(74) Representative: Hoffmann Eitle

(57) **Abstract**

According to one arrangement, an information processing method includes, based on a metamodel which is located in a first layer and in which a composition relationship and a reference relationship among plural types of information models located in a second layer are defined, creating a guide tree indicating a relationship between the information models. A data item (property) of data related to devices is defined in the information model. The guide tree (200) indicates that an upper-layer first information model in which a relationship is indicated in the guide tree (200) is able to use a data item defined in a lower-layer second information model.

## Description

### FIELD

The present disclosure relates to an information processing method.

### BACKGROUND

In recent years, for example, it has been considered to use Asset Administration Shell proposed in Industry 4.0 to realize Digital Twin of devices utilizing the Internet of Things (IoT). Asset indicates, for example, devices existing in the real world (physical devices) or the like, and data related to the devices is managed in the Asset Administration Shell.

The data related to the above devices can be created using AASX Package Explorer, which is provided as Open Source Software (OSS), but the data cannot easily be created.

### BRIEF DESCRIPTION OF THE DRAWINGS

FIG. 1 is a block diagram showing an example of a functional configuration of an information processing apparatus according to an arrangement.
FIG. 2 is a diagram showing an example of a hardware configuration of the information processing apparatus.
FIG. 3 is a flowchart showing an example of a processing procedure of the information processing device.
FIG. 4 is a diagram showing an example of a guide tree.
FIG. 5 is a table showing an example of an AAS definition table.
FIG. 6 is a table showing an example of a Submodel definition table.
FIG. 7 is a table showing an example of a state in which data is set in the AAS definition table.
FIG. 8 is a table showing an example of a state in which data is set in the Submodel definition table.
FIG. 9 is a diagram showing an example of a Submodel graph.
FIG. 10 is a diagram showing an example of a model tree.
FIG. 11 is a table showing an example of an instance data definition table.
FIG. 12 is a diagram showing an example of an instance data tree.
FIG. 13 is a diagram showing an example of an output setting screen.

### DETAILED DESCRIPTION

According to one arrangement, an information processing method includes, based on a metamodel which is located in a first layer and in which a composition relationship and a reference relationship among plural types of information models located in a second layer are defined, creating a guide tree indicating a relationship between the information models. A list of properties (data items) of data related to devices are structured and defined in the information model. The guide tree indicates that an upper-layer first information model in which a relationship is indicated in the guide tree is able to use a data item defined in a lower-layer second information model.

Various arrangements will be described with reference to the accompanying drawings.

An information processing apparatus of the arrangements is an electronic device used to use Asset Administration Shell, which has been proposed in, for example, Industry 4.0. The Asset Administration Shell corresponds to, for example, a mechanism for creating and storing (managing) data to realize Digital Twin of devices (data related to the devices). The devices existing in the real world (physical devices) are assumed as the asset in the arrangements, but facilities, people, systems, and the like may be included in the asset.

When the data handled in the Asset Administration Shell is referred to as AAS data, the AAS metamodel located on an M2 layer, the AAS model located on an M1 layer, and the AAS instance data located on an M0 layer are included in the AAS data. In the arrangements, the AAS metamodel is the fixed data defined under international standards, and the AAS model and AAS instance data correspond to the data related to the above-described devices.

The AAS metamodel corresponds to the data in which the description methodology (data structure, relationship, syntax, format, and the like) of the data related to the devices is defined. More specifically, composition and reference relationships among plural types of AAS models, and the like are defined in the AAS metamodel.

The AAS model corresponds to data in which data items of the data related to devices, correlations with other AAS models, and the like are defined. When a device is a battery managed by, for example, Home Energy Management System (HEMS), data items such as catalog information (model number, manufacturer, device number, and the like), an operational status, a measured current (A), and CO2 emission of the battery are defined in the AAS model.

The AAS instance data correspond to data of the data items defined in the AAS model. When the data items of the battery catalog information are defined in the above AAS model, the data of the data items of the battery catalog information are catalog values of the battery. In addition, when the data items of the operational status, the measured current, and the CO2 emission are defined in the AAS model described above, the data of the data items of the operational status, the measured current, and the CO2 emission are, for example, "ON", "5A", "50tCO2/GJ", and the like.

The information processing apparatus of the present arrangement includes a function to support, for example, creation of the AAS model, which corresponds to the data related to the devices.

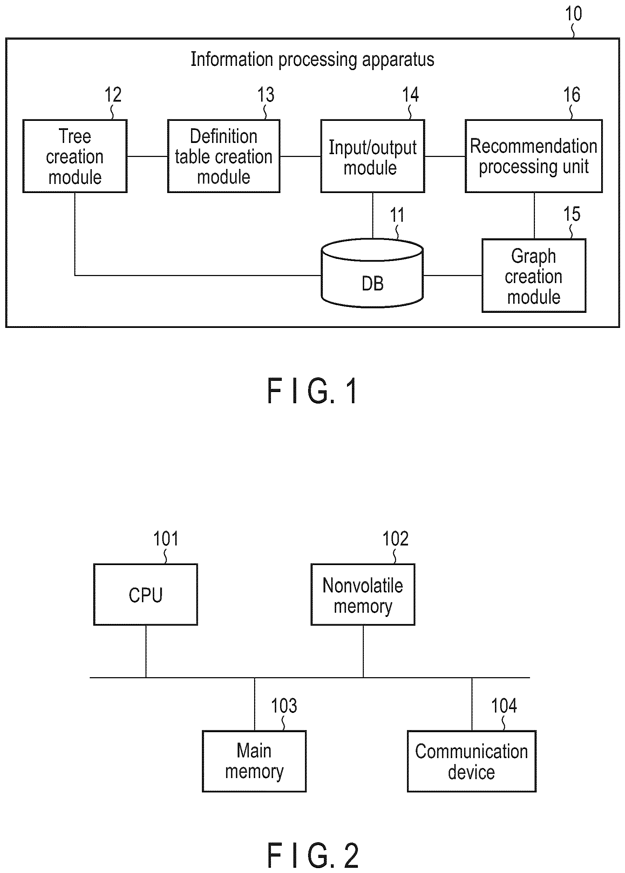

FIG. 1 is a block diagram showing an example of a functional configuration of the information processing apparatus of the present arrangement. As shown in FIG. 1, an information processing apparatus 10 includes a database (DB) 11, a tree creation module 12, a definition table creation module 13, an input/output module 14, a graph creation module 15, and a recommendation processing module 16.

AAS data handled in the Asset Administration Shell described above, and the like are stored in the database 11. The AAS metamodel, which are fixed data, are assumed to be stored in the database 11 in advance.

The tree creation module 12 creates a guide tree which indicates the relationships (correlations) among the AAS models, based on the AAS metamodels stored in the database 11 (composition and reference relationships among plural types of AAS models defined in the database 11).

The definition table creation module 13 creates, for example, a definition table for setting the attributes of the AAS models and the data items defined in the AAS models, based on the AAS metamodels and the guide tree created by the tree creation module 12.

The input/output module 14 outputs the guide tree created by the tree creation module 12 and the definition table created by the definition table creation module 13. Furthermore, the input/output module 14 inputs the data set for the definition table. The data input by the input/output module 14 (hereinafter referred to as input data) are stored in the database 11.

A plurality of Submodels in the Asset Administration Shell are included in the above-described AAS models. In this case, the data items defined for each of the plurality of Submodels are set in the above-described definition table. In other words, the data items defined for each of the plurality of Submodels are included in the input data stored in database 11.

The graph creation module 15 obtains the data items defined for each of the above-described plural Submodels from (input data stored in) the database 11, and creates a Submodel graph which includes nodes indicating each of the plural Submodels and links indicating relationships among Submodels.

The recommendation processing module 16 executes a process of recommending (candidates of) the data to be set in the definition table created by the definition table creation module 13, by using the above-described input data and the Submodel graph created by the graph creation module 15.

FIG. 2 shows an example of the hardware configuration of the information processing apparatus 10. As shown in FIG. 2, the information processing apparatus 10 includes a CPU 101, a nonvolatile memory 102, a main memory 103, a communication device 104, and the like.

The CPU 201 is a hardware processor which controls the operation of each component in the information processing apparatus 10. The CPU 101 executes various programs loaded from the nonvolatile memory 102 which is a storage device to the main memory 103. An operating system (OS), programs for supporting the creation of data related to the devices described above (hereinafter referred to as information processing programs), and the like, are included in the programs executed by the CPU 101.

The communication device 104 is a device configured to execute, for example, wired or wireless communication with an external device.

Although only the nonvolatile memory 102 and the main memory 103 are shown in FIG. 2, the information processing apparatus 10 may further include, for example, other storage devices such as Hard Disk Drive (HDD) and Solid State Drive (SSD). In addition, the information processing apparatus 10 may further include input devices such as a mouse and a keyboard, and a display device such as a display.

In the present arrangement, the database 11 shown in FIG. 1 is realized by the nonvolatile memory 102 shown in FIG. 2, other storage devices, or the like.

In addition, in the present arrangement, some or all of the tree creation module 12, the definition table creation module 13, the input/output module 14, the graph creation module 15, and the recommendation processing module 16 shown in FIG. 1 are assumed to be realized by urging the CPU 101 shown in FIG. 2 to execute an information processing program, i.e., by software. Some or all of these modules 12 to 16 may be realized by hardware such as Integrated Circuit (IC) or by a combined configuration of software and hardware.

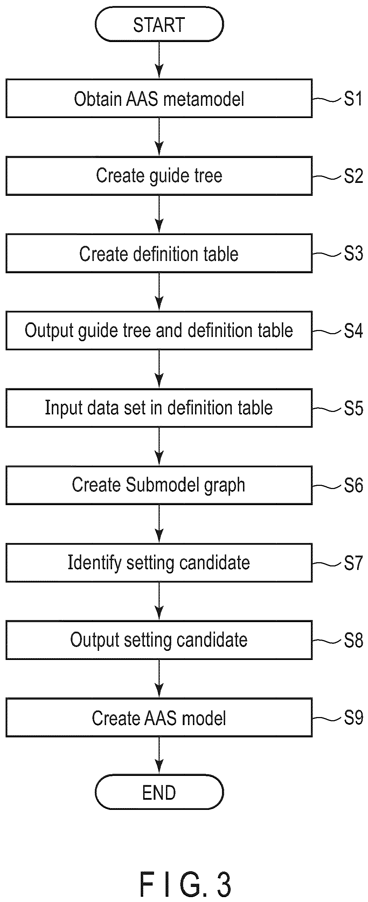

An example of the processing procedure of the information processing apparatus 10 will be described below with reference to a flowchart of FIG. 3.

The process shown in FIG. 3 may be executed at, for example, timing specified by the user using the information processing apparatus 10 (i.e., creator of the data related to the devices), but may also be executed at the other timing.

In addition, the information processing apparatus 10 of the present arrangement may be realized as, for example, a user terminal used by the user or as a server device communicably connected to the user terminal.

First, the tree creation module 12 obtains the AAS metamodel stored in the database 11 (step S1).

Next, the tree creation module 12 creates a guide tree indicating the relationships among AAS models (M1 layer information models) using composition relationships (has-a relationships) and reference relationships among plural types of AAS models defined in the AAS metamodel obtained in step S1 (step S2).

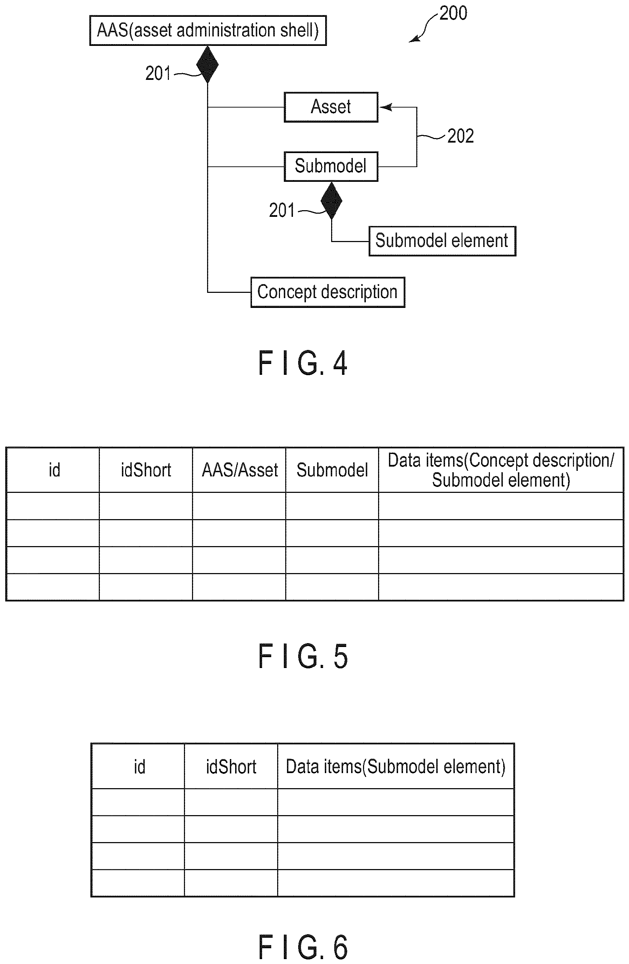

FIG. 4 shows an example of a guide tree created in step S2. AAS, Asset, Submodel, ConceptDescription, and SubmodelElement in the Asset Administration Shell can be included as the plural types of AAS models for which the composition relationships and the reference relationship are defined in the AAS metamodel (i.e., AAS models located in the M1 layer).

Mark 201 in a guide tree 200 shown in FIG. 4 indicates the composition relationship between the AAS models. In other words, according to the guide tree 200 shown in FIG. 4, it is shown that AAS has a relationship of containing Asset, Submodel, and ConceptDescription, and that Submodel has a relationship of containing SubmodelElement. In this case, AAS is an upper model of Asset, Submodel, and ConceptDescription, and Submodel is an upper-layer model of SubmodelElement. In other words, Asset, Submodel, and ConceptDescription are lower-layer models of AAS, and SubmodelElement is a lower-layer model of Submodel.

The guide tree 200 also indicates a relationship that the superordinate model (superordinate information model) whose composition relationship is indicated in the guide tree 200 can use the data items defined in the subordinate model (subordinate information model).

Arrow 202 in the guide tree 200 shown in FIG. 4 indicates the reference relationship between the AAS models. According to the guide tree 200 shown in FIG. 4, it is indicated that Submodel has a relationship referring to Asset.

In FIG. 4, it is assumed that the plural types of AAS models located in the M1 layer are AAS, Asset, Submodel, ConceptDescription and SubmodelElement as described above but, for example, other models such as Property may be included in the AAS models.

In FIG. 3, the definition table creation module 13 creates a definition table for each of the plural types of AAS models located in the M1 layer, based on the AAS metamodel obtained in step S1 and the guide tree created in step S2 (step S3).

The definition table created in step S3 will be described here with reference to FIG. 5 and FIG. 6.

FIG. 5 shows an example of a definition table (hereinafter referred to as an AAS definition table) created for the AAS among plural types of AAS models.

As shown in FIG. 5, the AAS definition table is configured to allow setting of id, idShort, AAS/Asset, Submodel, and data items

(ConceptDescription/SubmodelElement).
id is an identifier to identify the AAS. idShort corresponds to the name of the AAS identified by id. AAS/Asset is an AAS or Asset that is a lower-layer model of the AAS identified by id. Submodel is Submodel that is a lower-layer model of the AAS identified by id. The data items are data items (data items used in the AAS) defined in

ConceptDescription/SubmodelElement, which is a lower-layer model of) the AAS identified by id.

The AAS definition table shown in FIG. 5 is used to create the AAS. In other words, the AAS is created based on the data set in the AAS definition table (setting contents of the AAS definition table).
id and idShort in the AAS definition table shown in FIG. 5 correspond to the attributes of the AAS and are defined in the AAS metamodel. In addition, AAS/Asset, Submodel, and the data items (ConceptDescription/SubmodelElement) in the AAS definition table shown in FIG. 5 are specified based on the composition relationships shown in the guide tree. In other words, the AAS definition table is considered as a table including two types of columns based on the AAS metamodel and the guide tree. The definition table shown in FIG. 5 is an example, and the columns of the definition table consist of the above two types of data (AAS model and guide tree) depending on the arrangement.

FIG. 6 shows an example of a definition table created for Submodel among the plural types of AAS models (hereinafter referred to as a Submodel definition table).

As shown in FIG. 6, the Submodel definition table is configured to allow setting of id, idShort, and the data items (SubmodelElement).
id is an identifier to identify Submodel. idShort corresponds to the name of the Submodel identified by id. The data items are data items (data items used in the Submodel) defined in (SubmodelElement, which is a lower-layer model of) the Submodel identified by id.

The Submodel definition table shown in FIG. 6 is used to create the Submodel. In other words, the Submodel is created based on the data set in the Submodel definition table (i.e., setting contents of the Submodel definition table).

The id and idShort in the Submodel definition table shown in FIG. 6 correspond to the attributes of the Submodel and are defined in the AAS metamodel. In addition, the data items (SubmodelElement) in the Submodel definition table shown in FIG. 6 are identified based on the composition relationships shown in the guide tree. In other words, the Submodel definition table is considered as a table including two types of columns based on the AAS metamodel and the guide tree, similarly to the above-described AAS definition table.

The AAS definition table and the Submodel definition table have been described but, in step S3, the definition table for each of plural types of AAS models is created as described above.

In FIG. 3, the input/output module 14 outputs the guide tree created in step S2 and the definition tables (AAS definition table, Submodel definition table, and the like) created in step S3 (step S4). The guide tree and the definition tables output in step S4 are displayed on, for example, a display or the like.

In this case, by referring to the guide tree, the user can set various data to the definition tables while checking the relationships (composition and reference relationships) among plural types of AAS models located in the M1 layer in the Asset Administration Shell, by referring to the guide tree.

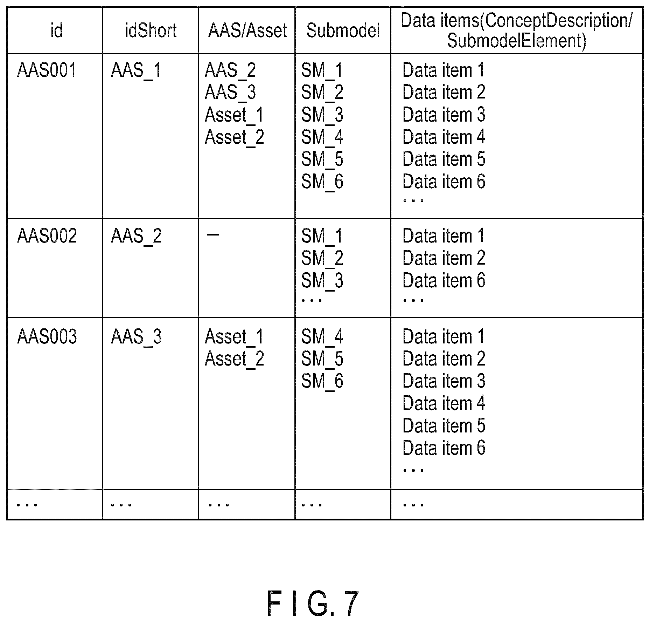

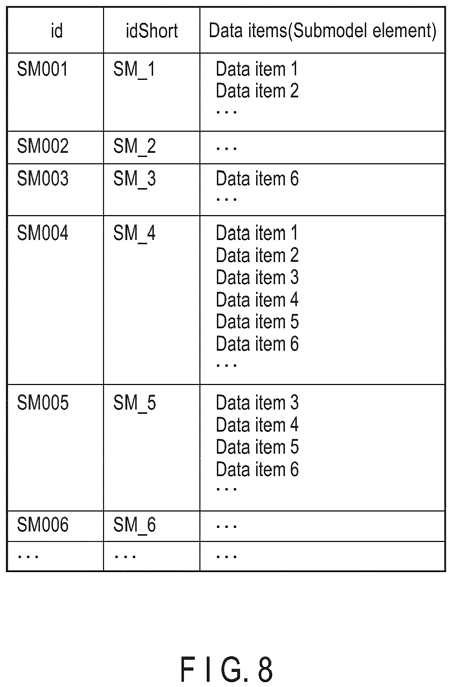

FIG. 7 shows an example of a state in which data is set (input) to the above-described AAS definition table shown in FIG. 5. FIG. 8 shows an example of a state in which data is set (input) in the Submodel Definition Table shown in FIG. 6 above.

The data items defined in the AAS include data items defined in the Submodel which is a lower-layer model of the AAS, and the like. Therefore, the data items set in the AAS definition table (i.e., data items defined in the AAS) may be automatically set using the data items set in the definition table of Submodel which is a lower-layer model of the AAS (i.e., data items defined in Submodel).

The data set in the definition tables as described above is input by the input/output module 14 (step S5). The data input in step S5 (input data) is stored in the database 11. For example, data set in the AAS definition table and data set in the Submodel definition table are included in the input data.

Next, the graph creation module 15 creates a Submodel graph, based on the input data stored in the database 11 (step S6).

The process of step S6 will be described below in detail. First, the graph creation module 15 adds a node indicating each of the plurality of Submodels to (a format of) the Submodel graph, based on the data set in (a column of) the Submodel of the above-described AAS definition table.

Next, the graph creation module 15 determines whether or not the data item common to two Submodels indicated by two nodes is defined, for each combination of two nodes included in the Submodel graph, based on the data set in (columns of) the data items of the above-described Submodel definition table described above (i.e., data items defined for Submodel). The graph creation module 15 adds to the Submodel graph a link (edge) to connect the two nodes indicating the two Submodels for which the common data item is determined to be defined.

In addition, the graph creation module 15 often creates a graph using not the common data item, but dependencies among data items (for example, measured values and temperature at the time of measurement) and the like.

The graph creation module 15 can thereby create the Submodel graph which includes the node indicating each of the plurality of Submodels and the links indicating the relationships among the Submodels.

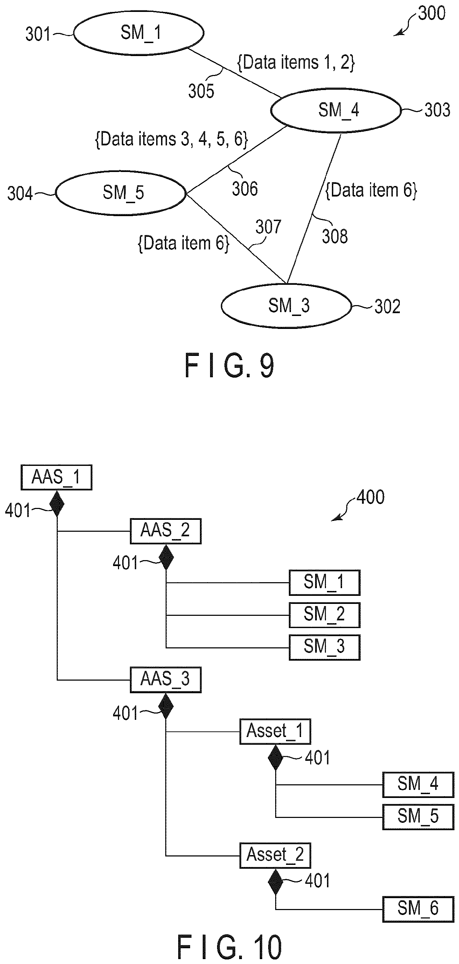

FIG. 9 shows an example of the Submodel graph created in step S6.

In a Submodel graph 300 shown in FIG. 9, nodes 301 to 304 indicating Submodels "SM_1", "SM_3", "SM_4", and "SM_5" are added. Submodel "SM_1" is a Submodel whose id is "SM001" and whose idShort is "SM_1". The other Submodels "SM_3", "SM_4", and "SM_5" are similarly configured although detailed explanations are omitted.

In addition, nodes 301 and 303 are connected by a link 305 in the Submodel graph 300. According to this, it can be understood that the data items common to Submodels "SM_1" and "SM_4" are defined. In addition, {data items 1 and 2} are added in the vicinity of the link 305. This indicates that the data items common to Submodels "SM_1" and "SM_4" are data item 1 and data item 2.

In addition, nodes 303 and 304 are connected by a link 306, in the Submodel graph 300. According to this, it can be understood that the data items common to Submodels "SM_4" and "SM_5" are defined. In addition, {data items 3, 4, 5, 6} are added in the vicinity of the link 306. This indicates that the data items common to Submodels "SM_4" and "SM_5" are data item 3, data item 4, data item 5 and data item 6.

Furthermore, nodes 302 and 304 are connected by a link 307 in the Submodel graph 300. According to this, it can be understood that the data item common to Submodels "SM_3" and "SM_S" is defined. In addition, {Data item 6} is added in the vicinity of the link 307. This indicates that the data item common to Submodels "SM_3" and "SM_5" is data item 6.

In addition, nodes 302 and 303 are connected by a link 308 in the Submodel graph 300. According to this, it can be understood that the data items common to Submodels "SM_3" and "SM_4" are defined. In addition, {Data item 6} is added in the vicinity of the link 308. This indicates that the data item common to Submodels "SM_3" and "SM_4" is data item 6.

In the example shown in FIG. 9, the data item common to the two Submodels indicated by two nodes connected by the link is added in the vicinity of each link, but the number of the common data items may be added in the vicinity of the link. Such number of the common data items can be used as, for example, a weight of the relationship between the two Submodels.

In FIG. 9, a part of the Submodel graph created based on the data set in the above AAS definition table shown in FIG. 7 and the data set in the Submodel definition table shown in FIG. 8 is shown, and Submodels "SM_2" and "SM_6 shown in FIG. 7 and FIG. 8, and the like are omitted.

In FIG. 3, the recommendation processing module 16 identifies candidates (hereinafter referred to as setting candidates) of the data to be set in the above definition table (for example, AAS definition table) (step S7).

The process of step S7 will be described below in detail. In the AAS definition table output in step S4 described above, the user needs to set the id, idShort, AAS/Asset, Submodel, and the data items (ConceptDescription/SubmodelElement) .

When it is assumed that, for example, the settings for the Submodel definition table are executed by the other user (i.e., the already set Submodel definition table is reused), the user executing the settings for the AAS definition table, who can set, for example, the data items, may not fully understand the settings in the Submodel definition table and may have difficulty in setting the Submodel in the AAS definition table according to the settings.

Therefore, in step S7, the Submodel which is to be set in the AAS definition table is identified as a setting candidate (hereinafter referred to as a first setting candidate), based on the data items set in the AAS definition table.

More specifically, in FIG. 8, for example, when data item 1 is set in (a column of) the data items of the AAS definition table, the recommendation processing module 16 identifies Submodels "SM_1" and "SM_4", and the like, for which the data item 1 is defined, as first setting candidates, based on the data set in the Submodel definition table.

In contrast, for example, when data item 6 is set in (the column of) the data items of the AAS definition table, the recommendation processing module 16 identifies Submodels "SM_3", "SM_4", and "SM_5", and the like, for which the data item 6 is defined, as first setting candidates, based on the data set in the Submodel definition table.

The data items set in the AAS definition table (i.e., the data items used to identify the setting candidates) may be one data item or a plurality of data items.

It has been described that the setting candidates are identified based on the data items set in the AAS definition table, but the setting candidates may also be identified based on the Submodel graph.

In this case, the recommendation processing module 16 can identify, for example, the Submodel (related submodel) whose relationship with the Submodel identified as the above-identified first setting candidate is indicated in the Submodel graph, as a setting candidate (hereinafter referred to as a second setting candidate).

More specifically, in FIG. 9, for example, when Submodel "SM_1" is identified as the first setting candidate, Submodel "SM_4" (Submodel indicated by node 303) connected to the Submodel "SM_1" (Submodel indicated by node 301) by the link 305 is identified as the second setting candidate.

In addition, for example, when Submodel "SM_4" is identified as the first setting candidate, Submodel "SM_1" (Submodel indicated by node 301) connected to the Submodel "SM_4" (Submodel indicated by node 303) by the link 305, Submodel "SM_3" (Submodel indicated by node 302) connected to the Submodel "SM_4" by the link 308, and Submodel "SM_5" (Submodel indicated by node 304) connected to the Submodel "SM_4" by the link 306, are identified as the second setting candidates.

It has been described that the Submodel whose relationship with the Submodel identified as the first setting candidate is indicated in the Submodel graph is identified as the second setting candidate, but, for example, the Submodel whose relationship with the Submodel set in the AAS definition table is indicated in the Submodel graph may be identified as the setting candidate.

The setting candidates identified in step S7 described above (i.e., a list including the Submodels identified as the first and second setting candidates) are output by the input/output module 14 (step S8). The setting candidates thus output are recommended to the user as (the candidates of) the Submodels which are to be set in the AAS definition table by, for example, displaying on a display or the like.

When setting (reflecting) the setting candidates output in step S8 in the AAS definition table is instructed by the user, the setting candidates (Submodels selected by the user) are set in the AAS definition table and input by the input/output module 14. It has been described that the setting candidates are set in the AAS definition table in response to the user's instructions, but the setting candidates may be automatically set in the AAS definition table.

In order to support the user in determining (selecting) the setting candidates to be set in the AAS definition table, each of the setting candidates (Submodels) may be assigned a priority (recommendation order). This priority is determined based on the number of common data items (weight of the relationship between two Submodels) attached to the links of the above-described Submodel graph. More specifically, for example, when Submodel "SM_4" is identified as a first recommendation candidate, Submodels "SM_1", "SM_3", and "SM_5" are identified as second recommendation candidates and, in this case, Submodel "SM_4" is assigned the highest priority (hereinafter referred to as "first priority"), Submodel "SM_5" connected by the link 306 whose number of the common data items is four is assigned a priority subordinate than the first priority (hereinafter referred to as a second priority), Submodel "SM_1" connected by the link 305 whose number of the common data items is two is assigned a priority subordinate than the second priority (hereinafter referred to as a third priority), and Submodel "SM_3" connected by the link 308 whose number of the common data item is one is assigned a priority subordinate than the third priority. The priority order described here is an example, and the priority order may be assigned by other methods.

When the process of step S8 is executed, an AAS model is created based on the data (input data) set in the definition table (step S9). In this case, for example, the AAS is created based on the data set in the AAS definition table (setting contents for the AAS definition table), and the Submodel is created based on the data set in the Submodel definition table (setting contents for the Submodel definition table). The AAS and Submodel have been described here, but the other AAS models are created in the same manner.

The process of step S9 described above is assumed to be executed in the information processing apparatus 10, but the information processing apparatus 10 may be configured to support the creation of the AAS models, and the process of step S9 may be executed outside the information processing apparatus 10.

As described above, in the present arrangement, a guide tree indicating the relationships among AAS models (information models) is created based on the AAS metamodels located in the M2 layer (first layer), and the definition table for setting the attributes of AAS models (for example, AAS and Submodels) and the data items defined in the AAS models is created based on the metamodels and the guide tree. In addition, in the present arrangement, the AAS models are automatically created based on the data set in the definition table created in this manner (i.e., the setting contents for the definition table).

In the present arrangement, the creation of the AAS models (i.e., data related to the devices) can be supported by the above-described configuration.

The definition tables in the present arrangement include, for example, an AAS definition table (first definition table) and a Submodel definition table (second definition table).

In this case, the Submodel for which the data items set in the AAS definition table are defined can be recommended as the Submodel which needs to be set in the AAS definition table.

In the present arrangement, for example, even if the user does not recognize the Submodel which needs to be set in the AAS definition table, creation of an AAS model (AAS) can be supported by such a configuration while reusing the Submodel for which the data items have already been defined. In other words, in the present arrangement, even a user with poor background knowledge of Asset Administration Shell can easily create the data related to the devices.

Furthermore, in the present arrangement, a Submodel graph including the node indicating each of the plural Submodels and the links indicating the relationships among the Submodels is created based on the data items defined for each of the Submodels set in the above-described Submodel definition table. In the present arrangement, the Submodels whose relationships with the recommended Submodels are indicated by the links included in the Submodel graph created in this manner (related Submodels of the recommended Submodels) may be further recommended. In addition, the related Submodel (second Submodel) of the Submodel (first Submodel) set in the AAS definition table may also be recommended as a Submodel which needs to be further set in the AAS definition table. In other words, the present arrangement may be configured to further recommend the Submodels which need to be set in the AAS definition table using the Submodel graph (commonality and dependencies of the data items used by the Submodels).

It has been described that the process shown in FIG. 3 described above is executed in the present arrangement, but some of the processes shown in FIG. 3 may be omitted.

More specifically, for example, the information processing apparatus 10 of the present arrangement may operate to simply create and output (present to the user) the guide tree. While various types of AAS models (AAS, Asset, Submodel, ConceptDescription, and the like) are provided in the M1 layer and have mutual reference relationship and composition relationship, the configuration of simply outputting the guide tree as described above is considered to be capable of supporting the creation of the data (AAS model) related to the device since the user can understand the relationship between the AAS models and create the AAS models by referring to the guide tree. In other words, in the present arrangement, processes other than the creation and output of the guide tree may be omitted.

In addition, for example, the information processing apparatus 10 of the present arrangement may also operate to create and output the guide tree and the definition table. According to such a configuration, the creation of the data related to the devices can be supported since the user can easily create the AAS model by only setting the data in flat format in the definition table while referring to the guide tree. In other words, it has been described that, for example, the Submodels which need to be set in the AAS definition table are recommended as the setting candidates, in the present arrangement, but if the user can set all the data in the definition table (AAS definition table) the process related to such recommendation may be omitted.

In addition, it has been described that the Submodel graph is used to recommend the Submodels which need to be set in the AAS definition table, in the present arrangement, but the Submodel graph may be output (presented to the user). In general, the relationship between the Submodels cannot be defined in the use of the Asset Administration Shell but, according to the configuration which outputs the Submodel graph as described above, the user can easily recognize the relationship between a plurality of Submodels by referring to the Submodel graph.

Furthermore, it has been described that the guide tree is created based on the AAS metamodel, in the present arrangement, but the tree creation module 12 may be configured to create the model tree based on, for example, the data set in the AAS definition table (attributes of each AAS, the Submodel which is a lower-layer model of each AAS, and the like).

FIG. 10 shows an example of a model tree created based on, for example, the data set in the AAS definition table shown in FIG. 7. Mark 401 in the model tree 400 shown in FIG. 10 indicates the composition relationship between the AAS models. When such a model tree 400 is output (presented to the user), the user can confirm the relationship between the AAS models based on the data set in the AAS definition table (i.e., the user's setting contents for the AAS definition table). The model tree is assumed to conform to the constraints of the relationships among the AAS models indicated by the above-described guide tree.

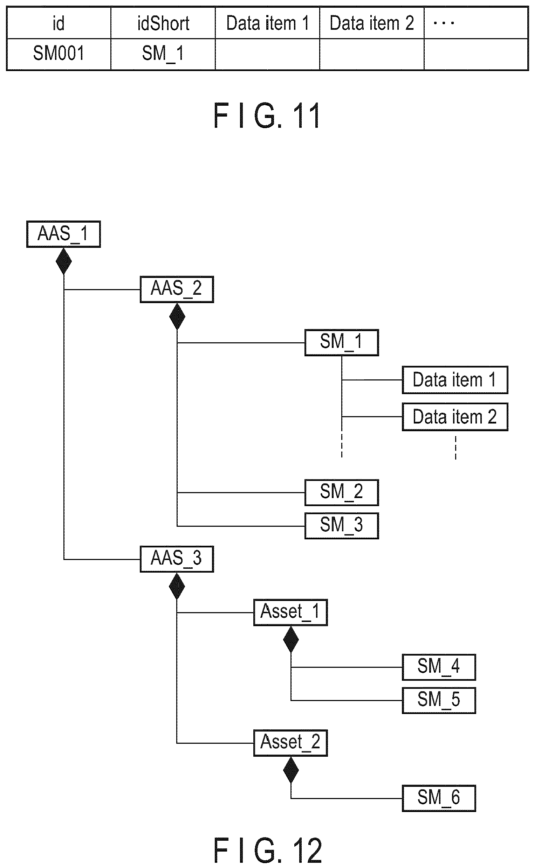

In addition, it has been described that in the present arrangement, for example, the AAS definition table and the Submodel definition table are created and the AAS and the Submodel are automatically created (i.e., creation of the AAS model is supported as the data related to the devices) based on the data set in the AAS definition table and the Submodel definition table, but the present arrangement may also be configured to support the creation of the AAS instance data as the data related to the devices. In this case, for example, the definition table creation module 13 further creates a definition table (third definition table) in which data for data items defined in the AAS model as shown in, for example, FIG. 11 can be set. FIG. 11 shows an example of a definition table for setting the data for each of the data items defined in Submodel "SM_1" (hereinafter referred to as an instance data definition table). When such an instance data definition table is output and data is set in the instance data definition table by the user, the information processing apparatus 10 can input the data and automatically create the AAS instance data based on the data.

In addition, the tree creation module 12 may create the instance data tree shown in FIG. 12 by adding the data set in the above-described instance data definition table (data for each data item) to the model tree shown in FIG. 10. According to such an instance data tree, the user can confirm the user's setting contents for the instance data definition table.

The instance data definition table is created for each AAS model and, when the same data item is commonly set (defined) in a plurality of AAS models, the data (AAS instance data) for the data item also becomes common. For this reason, for example, data set in one instance data definition table out of the plurality of instance data definition tables created for each AAS model may be automatically set (i.e., reused) in the other instance data definition tables.

More specifically, according to FIG. 8, for example, in Submodel "SM_1" and Submodel "SM_4", data item 1 and data item 2 defined in the Submodels are common. In this case, for example, by setting the data of data item 1 and the data of data item 2 defined for Submodel "SM_1" in the instance data definition table, such data is automatically set in the instance data definition table as the data of data item 1 and the data of data item 2 defined in Submodel "SM_4". By thus reusing the data of data item 1 and the data of data item 2 defined in Submodel "SM_1" as the data of data item 1 and the data of data item 2 defined in Submodel "SM_4", the user's labor to set, for example, data individually for each Submodel can be reduced.

In other words, in general, AAS instance data needs to be created for each data item while tracing the structure of the AAS model, in AASX Package Explorer. According to the above-described instance data definition table, for example, since the data of data items commonly defined for a plurality of AAS models (AAS instance data) can be set (created) simultaneously, the ease of creating the AAS instance data can be improved.

By the way, in the present arrangement, for example, the AAS can be automatically created based on the data set in the AAS definition table (setting contents for the AAS definition table) and the Submodel can be automatically created based on the data set in the Submodel definition table (setting contents for the Submodel definition table), and the AAS and the Submodel (i.e., AAS model) created automatically in this manner can be output for, for example, user's confirmation. The AAS model has been described, and the automatically created AAS instance data can also be created similarly.

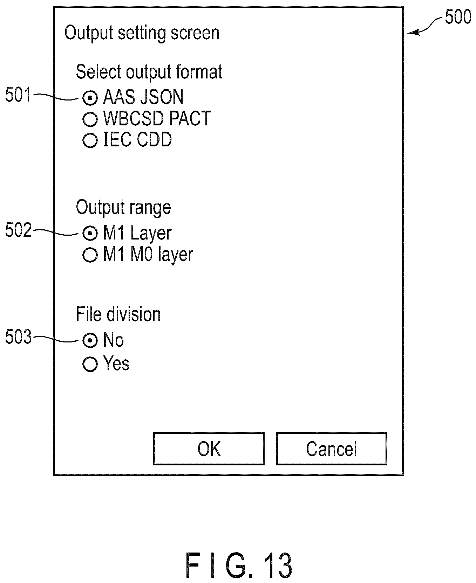

In this case, it is assumed that the user can execute settings related to the output of the above AAS model and AAS instance data via, for example, an output setting screen as shown in FIG. 13. First to third areas 501 to 503 are provided in the output setting screen 500 shown in FIG. 13.

The first area 501 is an area for selecting (specifying) the output format of the AAS model and AAS instance data. In the first area 501, one of "AAS JSON", "WBCSD PACT", and "IEC CDD" can be selected as the output format of the AAS model and AAS instance data. AAS JSON is an example of the data format conforming to the AAS metamodel. When "AAS JSON" is selected in the first area 501, the AAS model and AAS instance data are output in AAS JSON format. When "WBCSD PACT" is selected in the first area 501, the AAS model and AAS instance data are output in WBCSD PACT format. When "IEC CDD" is selected in the first area 501, the AAS model and AAS instance data are output in IEC CDD format.

The second area 502 is an area for selecting (specifying) the output range of the AAS model and AAS instance data. In the second area 502, one of "M1 layer (first output range)" and "M1M0 layer (second output range)" can be selected. When "M1 layer" is selected in the second area 502, the AAS model located in the M1 layer is output. When "M1M0 layer" is selected in the second area 502, the AAS model located in the M1 layer and the AAS instance data located in the M0 layer are output. Although not shown in FIG. 13, for example, "M0 layer" where only AAS instance data is output may be further prepared.

The third area 503 is an area for selecting (specifying) whether or not to divide the file when outputting the AAS model and AAS instance data as a file (i.e., file division or no file division). In the third area 503, one of "No" and "Yes" can be selected. When "No" is selected in the third area 503, the AAS model and the AAS instance data are output in a single file. When "Yes" is selected in the third area 503, the AAS model and the AAS instance data are output in a plurality of files. When the AAS model and the AAS instance data are output in a plurality of files, for example, AAS and Submodel may be output in different files.

According to the configuration for specifying (selecting) the output format, output range, and file division for the AAS model and the AAS instance data via the output setting screen 500 as shown in FIG. 13, the user can improve the efficiency in confirmation work of the automatically created AAS model and AAS instance data.

It has been described that the Submodel graph indicating the relationship between the Submodels is created, in the present arrangement but, for example, an AAS graph including nodes indicating AAS set in the AAS definition table and links indicating the relationship between the AAS can also be created. In addition, for example, an Asset graph including nodes indicating Asset set in the AAS definition table and links indicating the relationships among the Asset can also be created. Detailed descriptions of the AAS graph and the Asset graph are omitted since they are similar to the Submodel graph except that the Submodel is AAS and Asset. The user can easily recognize the relationships among plural AAS and the relationships among plural Asset, by referring to such AAS graph and such Asset graph.

According to the present arrangement as described above, since the user can simultaneously create plural AAS models and AAS instance data (data related to devices) without considering the correlation between the data, the efficiency and ease in creating the data related to the devices can be improved. In addition, the Submodel graph, and the like created in the present can be shared as know-how in the Asset Administration Shell and can be used to improve the data reusability.

Furthermore, since the information processing apparatus 10 of the present arrangement is considered to be usable as part of a general-purpose mechanism for response to, for example, carbon footprint of apparatus (products), the utilization of the Asset Administration Shell for response to the carbon footprint can be promoted.

It has been described that the Asset Administration Shell is used in the present arrangement, but the information processing apparatus 10 of the present arrangement may operate to support the creation of models of data using a multilevel structure such as metamodels and instance data (data related to devices), and is not necessarily limited to a configuration using the Asset Administration Shell.

While certain arrangements have been described, these arrangements have been presented by way of example only, and are not intended to limit the scope of the claims. Indeed, the methods described herein may be embodied in a variety of other forms; furthermore, various omissions, substitutions and changes in the form of the methods described herein may be made.

The arrangements as described above include clauses below.
Clause 1 An information processing method characterized by including:
   based on a metamodel which is located in a first layer and in which a composition relationship and a reference relationship among plural types of information models located in a second layer are defined, creating a guide tree indicating a relationship between the information models, characterized in that
   a data item of data related to devices is defined in the information model, and
   the guide tree indicates that an upper-layer first information model in which a relationship is indicated in the guide tree is able to use a data item defined in a lower-layer second information model.
Clause 2 The method of Clause 1, characterized by further including:
   creating a definition table for setting attributes of the information model and data items defined in the information model, based on the metamodel and the guide tree.
Clause 3 The method of Clause 2, characterized in that
   the definition table includes a first definition table for setting attributes of the first information model, the second information model and data items defined in the first information model, and a second definition table for setting attributes of the second information model and data items defined in the second information model.
Clause 4 The method of Clause 3, characterized in that
   the first information model includes AAS in Asset Administration Shell,
   the second information model includes a submodel in the Asset Administration Shell,
   the method further includes creating a submodel graph including a node indicating each of the submodels and a link (edge) indicating a relationship between the submodels, based on data items defined in each of the submodels set in the second definition table, and
   data items common to two submodels whose relationship is indicated by the link or link with the number of data items (i.e., weighted-edge) is added to the submodel graph.
Clause 5 The method of Clause 4, characterized by further including:
   recommending, based on the data item set in the first definition table, a submodel for which the data item is defined as a submodel to be set in the first definition table.
Clause 6 The method of Clause 5, characterized in that
   the recommending includes further recommending a submodel whose relationship with the recommended submodel is indicated by the link included in the submodel graph.
Clause 7 The method of any one of Clauses 4 to 6, characterized by further including:
   recommending a second submodel whose relationship with a fist submodel set in the first definition table is indicated by the link included in the submodel graph, as a submodel to be further set in the first definition table.
Clause 8 The method of any one of Clauses 5 to 7, characterized in that
   the recommended submodel is assigned with a priority determined based on the submodel graph.
Clause 9 The method of any one of Clauses 5 to 8, characterized in that
   the recommended submodel is set in the first definition table.
Clause 10 The method of any one of Clauses 3 to 9, characterized by further including:
   creating a third definition table for setting data of a data item defined in the information model set in the definition table.
Clause 11 The method of Clause 10, characterized in that
   the third definition table is created for each of the information models, and
   data set in one of the third definition tables created for the respective information models is reused for the other third definition table.
Clause 12 The method of any one of Clauses 3 to 11, characterized by further including:
   creating a model tree indicating a relationship between the first and second information models, based on the attribute of the first information model and the second information model set in the first definition table, wherein
   the model tree conforms to a constraint of a relationship indicated by the guide tree.
Clause 13 The method of Clause 10 or 11, characterized by further including:
   creating an instance data tree indicating a relationship between the first and second information models, and the data, based on the attribute of the first information model and the second information model set in the first definition table, and data set in the third definition table, wherein
   the instance data tree conforms to a constraint of a relationship indicated by the guide tree.
Clause 14 The method of any one of Clauses 3 to 13, characterized by further including:
   creating the first information model, based on setting contents for the first definition table; and
   creating the second information model, based on setting contents for the second definition table.
Clause 15 The method of Clause 14, characterized by further including:
   outputting the created first and second information models in a specified format.
Clause 16 The method of Clause 15, characterized in that
   the outputting includes further outputting data of data items defined in the created first and second information models.
Clause 17 The method of Clause 16, characterized in that
   one of a first output range indicating outputting the first and second information models, and a second output range of outputting the first and second information models and the data of the data items defined in the first and second information models is specified by a user.
Clause 18 The method of any one of Clauses 15 to 17, characterized in that
   the outputting includes outputting the first and second information models in different files.
Clause 19 The method of any one of Clauses 4 to 18, characterized in that
   the creating includes further creating an AAS graph including a node indicating each of the AAS and a link indicating a relationship between the AAS.
Clause 20 The method of any one of Clauses 4 to 18, characterized in that
   the second information model includes Asset in Asset Administration Shell, and
   the creating includes further creating an Asset graph including a node indicating each of the Asset and a link indicating a relationship between the Asset.
Clause 21 An information processing apparatus characterized by including:
   a processor configured, based on a metamodel which is located in a first layer and in which a composition relationship and a reference relationship among plural types of information models located in a second layer are defined, to create a guide tree indicating a relationship between the information models, characterized in that
   a data item of data related to devices is defined in the information model, and
   the guide tree indicates that an upper-layer first information model in which a relationship is indicated in the guide tree is able to use a data item defined in a lower-layer second information model.
Clause 22 A non-transitory computer-readable storage medium having stored thereon a program which is executed by a computer, the program characterized by including instructions capable of causing the computer to execute functions of:
   based on a metamodel which is located in a first layer and in which a composition relationship and a reference relationship among plural types of information models located in a second layer are defined, creating a guide tree indicating a relationship between the information models, characterized in that
   a data item of data related to devices is defined in the information model, and
   the guide tree indicates that an upper-layer first information model in which a relationship is indicated in the guide tree is able to use a data item defined in a lower-layer second information model.

## Claims

1. An information processing method **characterized by** comprising:
based on a metamodel which is located in a first layer and in which a composition relationship and a reference relationship among plural types of information models located in a second layer are defined, creating a guide tree indicating a relationship between the information models, **characterized in that**
a data item of data related to devices is defined in the information model, and
the guide tree (200) indicates that an upper-layer first information model in which a relationship is indicated in the guide tree (200) is able to use a data item defined in a lower-layer second information model.

2. The method of claim 1, **characterized by** further comprising:
creating a definition table for setting attributes of the information model and data items defined in the information model, based on the metamodel and the guide tree.

3. The method of claim 2, **characterized in that** the definition table includes a first definition table for setting attributes of the first information model, the second information model and data items defined in the first information model, and a second definition table for setting attributes of the second information model and data items defined in the second information model.

4. The method of claim 3, **characterized in that** the first information model includes AAS in Asset Administration Shell,
the second information model includes a submodel in the Asset Administration Shell,
the method further comprises creating a submodel graph (300) including a node (301, 302, 303, 304) indicating each of the submodels and a link (305, 306, 307, 308) indicating a relationship between the submodels, based on data items defined in each of the submodels set in the second definition table, and
data items common to two submodels whose relationship is indicated by the link or link with the number of data items is added to the submodel graph (300) .

5. The method of claim 4, **characterized by** further comprising:
recommending, based on the data item set in the first definition table, a submodel for which the data item is defined as a submodel to be set in the first definition table.

6. The method of claim 5, **characterized in that** the recommending includes further recommending a submodel whose relationship with the recommended submodel is indicated by the link included in the submodel graph (300).

7. The method of any one of claims 4 to 6, **characterized by** further comprising:
recommending a second submodel whose relationship with a fist submodel set in the first definition table is indicated by the link included in the submodel graph (300), as a submodel to be further set in the first definition table.

8. The method of any one of claims 5 to 7, **characterized in that**
the recommended submodel is assigned with a priority determined based on the submodel graph (300).

9. The method of any one of claims 5 to 8, **characterized in that**
the recommended submodel is set in the first definition table.

10. The method of any one of claims 3 to 9, **characterized by** further comprising:
creating a third definition table for setting data of a data item defined in the information model set in the definition table.

11. The method of claim 10, **characterized in that** the third definition table is created for each of the information models, and
data set in one of the third definition tables created for the respective information models is reused for the other third definition table.

12. The method of any one of claims 3 to 11, **characterized by** further comprising:
creating a model tree (400) indicating a relationship between the first and second information models, based on the attribute of the first information model and the second information model set in the first definition table, **characterized in that**
the model tree (400) conforms to a constraint of a relationship indicated by the guide tree (200).

13. The method of claim 10 or 11, **characterized by** further comprising:
creating an instance data tree indicating a relationship between the first and second information models, and the data, based on the attribute of the first information model and the second information model set in the first definition table, and data set in the third definition table, **characterized in that**
the instance data tree conforms to a constraint of a relationship indicated by the guide tree (200).

14. The method of any one of claims 3 to 13, **characterized by** further comprising:
creating the first information model, based on setting contents for the first definition table; and
creating the second information model, based on setting contents for the second definition table.

15. The method of claim 14, **characterized by** further comprising:
outputting the created first and second information models in a specified format.
